(19) **Europäisches Patentamt European Patent Office Office européen des brevets**

(11) **EP 1 732 727 B1**

(12) **EUROPEAN PATENT SPECIFICATION**

(45) Date of publication and mention
of the grant of the patent:
**11.03.2009 Bulletin 2009/11**

(51) Int Cl.:
*B23F 13/06* (2006.01)    *B23F 23/00* (2006.01)
*F16H 1/16* (2006.01)

(21) Application number: **05709007.8**

(86) International application number:
**PCT/IB2005/050898**

(22) Date of filing: **14.03.2005**

(87) International publication number:
**WO 2005/089996 (29.09.2005 Gazette 2005/39)**

(54) **METHOD FOR CUTTING WORM AND WORM GEAR IN A WORM AND GEAR REDUCTION UNIT WITH CIRCULATION OF BEARING BALLS AND RELATED CUTTING TOOLS**

VERFAHREN ZUM SCHNEIDEN VON SCHNECKE UND SCHNECKENGETRIEBE IN EINEM SCHNECKENUNTERSETZUNGSGETRIEBE MIT ZIRKULATION VON LAGERKUGELN UND VERWANDTE SCHNEIDWERKZEUGE

PROCEDE DE DECOUPAGE D'UNE VIS ET D'UNE ROUE A VIS DANS UNE UNITE DE REDUCTION DE VIS SANS FIN GRACE AU DEPLACEMENT DE BILLES DE ROULEMENT ET INSTRUMENTS DE DECOUPAGE ASSOCIES

(84) Designated Contracting States:
**AT BE BG CH CY CZ DE DK EE ES FI FR GB GR HU IE IS IT LI LT LU MC NL PL PT RO SE SI SK TR**

(30) Priority: **18.03.2004 IT RM20040138**

(43) Date of publication of application:
**20.12.2006 Bulletin 2006/51**

(73) Proprietor: **Universita' degli studi di Roma
I-00173 Roma (IT)**

(72) Inventors:
• **SALVINI, Pietro
Univ. d. Studi di Roma Tor Vergata
I-00173 Roma (IT)**

• **SERPELLA, Domenico
Univ. Studi di Roma Tor Vergata
I-00173 Roma (IT)**
• **VIVIO, Francesco
Univ. Studi di Roma Tor Vergata
I-00173 Roma (IT)**
• **VULLO, Vincenzo
Univ. d. Studi di Roma Tor Vergata
I-00173 Roma (IT)**

(74) Representative: **Papa, Elisabetta et al
Società Italiana Brevetti S.p.A
Piazza di Pietra, 38-39
00186 Roma (IT)**

(56) References cited:
**WO-A-03/042574**      **US-A- 3 494 215**
**US-A- 6 148 683**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention refers to a method for cutting worm and worm wheel in a worm gear mechanical power transmission system with circulation of bearing balls and to the related cutting tools.

As it is known, mechanical speed reduction units of the so-called "worm gear" kind are based on the mating of a worm with an helical worm wheel. As it is well-known, such reduction units are used to obtain high transmission ratios. A drawback of the worm-gear reduction units lies in the fact that they exhibit low mechanical efficiency, due to the sliding between the bodies into contact, and low operative speeds. For these reasons, their use is actually limited to applications in which the powers involved are low.

In an attempt to overcome said drawbacks, it has been proposed to mediate the contact of the sliding elements by bearing balls, i.e. by providing a system for the circulation of bearing balls entailing the passage from conditions of sliding friction to the more advantageous ones of rolling friction. An example of endless worm-gear reduction unit with circulation of bearing balls is illustrated in US 3,494,215.

However, the Inventors found out that the worm-gear reduction units with circulation of bearing balls conceived to date do not exhibit a kinematically compatible worm - bearing balls - worm wheel mating, thereby not allowing the free and perfectly confined circulation of the bearing balls in the corresponding guide races. In fact, the correct and continuous contact among the bearing balls themselves and between those and the sides of the races is not ensured. Such drawbacks are due to the inadequate modes of cutting the races onto the worm and the worm wheel that have been proposed to date.

The worm-gear reduction units with circulation of bearing balls conceived to date use basically the same cutting modes of the traditional sliding worm-gear reduction units; these modes are based on the definition of the profile of the worm, on the construction of the latter, on the construction of a suitable tool or hob with profiles identical to that of the worm but with an increased addendum and, lastly, on the use of such a tool or hob for the cutting of the worm wheel. When the contact between worm and worm wheel is mediated by the interposition of bearing balls, said traditional cutting mechanisms, above all in case worm and worm wheel are both globoidal, prove inadequate and, if applied, they cause an interference between worm and worm wheel, with a consequent sticking of the bearing balls, and/or an excessive slack of the latter in the related races, with a consequent loss of contact. The Inventors detected these relevant drawbacks by analyzing the worm and worm wheel mating conditions on planes differing from the reference ones usually considered by the known art, as it will be detailed at the beginning of the detailed description of the invention reported hereinafter. WO 03/042574 refers to a ball-worm transmission perfected in order to reduce the friction between the worm, the balls and the gear. The problem is solved by choosing a particular tooth profile for both the worm and the gear. The profile being defined as the shape of the tooth in a section perpendicular to the trajectory.

The present invention is indeed based on the detection of the abovementioned drawbacks of the worm-gear reduction units with circulation of bearing balls conceived to date, and it consists of the proposed solution to a specific technical problem, i.e. that of providing a method for cutting and cutting tools overcoming the abovementioned drawbacks.

Such a problem is solved by a method for cutting according to claim 4.

According to the same inventive concept, the present invention further refers to a cutting tool gear according to claim 1. Preferred features of the present invention are present in the dependent claims thereof. The present invention provides several relevant advantages.

The main advantage of the invention lies in that, with the process for cutting the races onto the worm and the worm wheel proposed by the present invention, it is attained, in any section of the mated bodies, a configuration of the races obtained on worm and worm wheel apt to ensure a correct guide for the bearing balls, without sticking and without excessive slacks, in their rolling onto the related mating surfaces of the races.

Other advantages and features, as well as the operation modes of the present invention will be made evident in the following detailed description of some embodiments thereof, given by way of a non-limiting example. Reference will be made to the figures of the annexed drawings, wherein:

Figure 1 shows a view of the section of a general worm - worm wheel mating taken along the median transverse plane of the worm;

Figure 2 shows the same view of Figure 1, highlighting some significant variables;

Figures 3A and 3B each schematically illustrate the modes of cutting the worm wheel of Figure 1 and, in particular, of an angular sector thereof;

Figure 4 illustrates the general trajectory of the center of the cutting tool, in the operation of cutting the worm of Figure 1;

Figure 5 shows the section of the worm of Figure 1 with its axial plane, coincident with the median transverse plane of the worm wheel, and it highlights some significant variables thereof;

Figure 6 shows a section of the worm - worm wheel mating of Figure 1 with the median transverse plane of the worm wheel;

Figure 6A shows an enlarged detail of Figure 6;

Figure 7 shows a section of the worm - worm wheel mating of Figure 1 with a transverse plane of the worm wheel parallel to that of Figure 6;

Figure 7A shows an enlarged detail of Figure 7;

Figure 8 shows a sectional view, with a plane parallel to the median transverse plane of the worm wheel, of an embodiment of the worm-gear transmission system with circulation of bearing balls according to the present invention;

Figure 9 shows a perspective view of a scheme of cutting tool according to the invention (generating profile);

Figure 10 shows a perspective view of the cutting element of Figure 9 and of the worm during the cutting of the races on the latter according to the invention;

Figure 11 schematically illustrates the motion of the cutting element for the worm in the axial plane of the worm coincident with the median transverse plane of the worm wheel;

Figure 12 exemplarily shows some reference start points of the subsequent cutting passes of the worm of the present invention;

Figure 13 schematically illustrates the modes of cutting the worm in the median transverse plane of the latter according to one of the modes for carrying out the invention (the views in the direction of the axis of the cutting edge of the tool and that from B highlight the circular configuration of the cutting edge and the rotation $\alpha$ of the toolholder axis, respectively);

Figure 14 schematically illustrates two subsequent passes for cutting the worm according to the present invention in the median transverse plane of the worm wheel and in a plane parallel to the latter plane.

Figure 15 shows a side view of the worm 2 of Figure 8;

Figure 16 shows a sectional view of the worm of Figure 8, with a transverse plane of the worm wheel, i.e., a plane parallel to the median transverse plane of the worm wheel itself, after a single machining pass;

Figure 16A shows a detail of the worm of Figure 15 upon completion of a number of machining passes;

Figure 17 shows a side view of the worm wheel 3 of Figure 8;

Figure 18 shows a perspective view of an embodiment of the tool worm wheel according to the invention; and Figure 19 shows a perspective view of the tool of Figure 9, in which its correspondence to the tool worm wheel of Figure 18 is indicated.

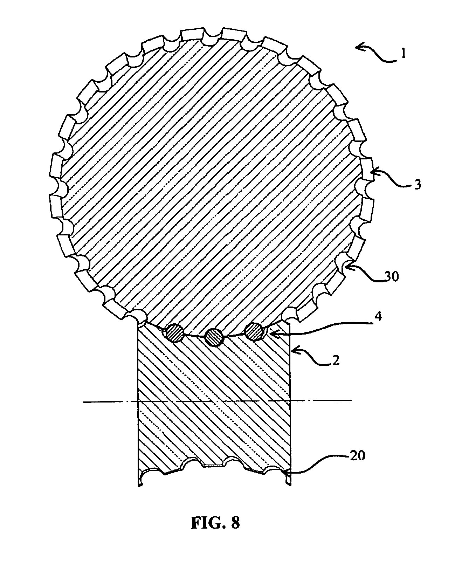

A worm-gear transmission system with circulation of bearing balls manufactured according to the invention, in particular a reduction unit, is shown in Figure 8 and generally denoted by 1. The system 1 comprises a worm 2 and a worm wheel 3 mated by interposition of bearing balls 4, the latter apt to roll within races obtained onto the worm 2 and the worm wheel 3 and denoted by 20 and 30, respectively. Both the worm 2 and the worm wheel 3 have a globoidal profile, thereby exhibiting a revolution side surface having a double curvature. The selection of profiles both globoidal for the worm and the worm wheel ensures the highest possible number of bearing balls simultaneously into contact on the worm and worm wheel races, thereby allowing the transmission of engineeringly significant powers. From a purely kinematical standpoint, another advantageous aspect of the globoidal shape of both elements consists in an improved capability of guiding the bearing balls inside the races obtained onto the globoidal elements themselves.

Moreover, in system 1, worm 2 and worm wheel 3 are mated with the respective axes thereof skew and, in particular, orthogonal.

The methodology for cutting the worm 2 and the worm wheel 3 of system 1 will be disclosed later on. However, in order to better appreciate the contribution of the invention, hereinafter first it will be reported a study, performed by the Inventors, on the traditional worm and worm wheel cutting methodologies, said study highlighting the drawbacks of the cutting systems developed so far and already mentioned in the introduction.

In the foregoing as well as hereinafter, conventionally for "transverse plane", "normal plane" and "axial plane" there have been and will be indicated a plane perpendicular to the axis, a plane perpendicular to the line of the sides, and therefore to the helix, and a plane containing the axis, respectively.

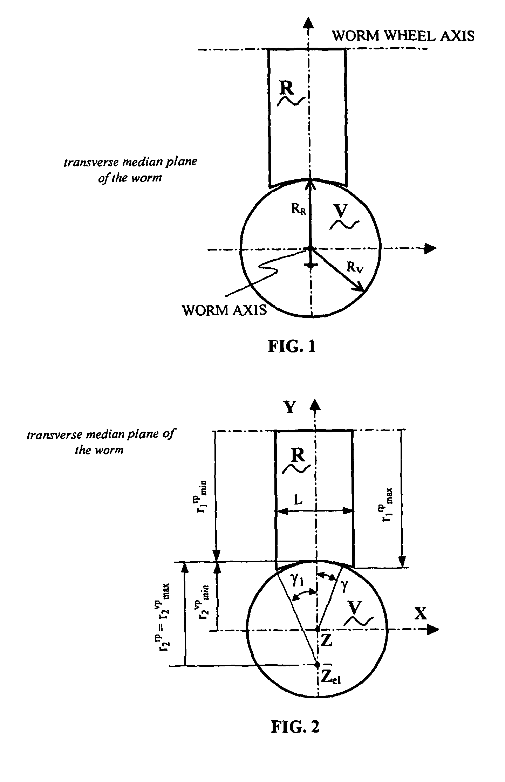

Figure 1 shows a sectional view of a general globoidal worm V - globoidal worm wheel R mating, of the kind with circulation of bearing balls and having orthogonal axes, which section is taken along the median transverse plane of the worm.

In order not to have such worm and worm wheel interfering with one another during their relative motion, the outer surface of the worm wheel should have, in any transverse plane of the worm, a curvature radius $R_R$ not smaller than the Rv radius of the worm itself. Such a relation between curvature radiuses of worm and worm wheel in the transverse planes of the worm becomes more and more critical going from the median transverse plane of the worm to the transverse end planes thereof, in which the worm has a curvature radius greater than that had in its central transverse plane.

One of the ways to comply with the non-interference condition in said transverse end planes of the worm is to set the corresponding curvature radius of the worm wheel equal at least to the curvature radius of the worm in said end planes. However, shifting toward the transverse median section of the worm, this solution causes an increase of the gap between the mating surfaces of the worm and of the worm wheel.

As already mentioned in the introduction, with reference to the actual patent literature, the worm - worm wheel mating has always been studied solely in the two reference planes, and precisely the transverse median plane of the worm wheel, containing the axis of the worm, and the transverse median plane of the worm containing the worm wheel axis, the latter coincident with the plane of Figure 1.

However, the Inventors found out that the triaxial study of the contact, in planes parallel to said two reference planes, highlights worm - worm wheel interferences all the more marked the farthest the planes are from the reference planes, as shown in the following.

Figure 2 again illustrates the general worm V - worm wheel R mating; in such figure some quantities significant to the following discussion are indicated. The XY plane of Figure 2 is transverse for the worm, whereas the YZ plane is transverse for the worm wheel. By convention, the curvature radiuses of worm and worm wheel are denoted by subscript "1" when referred to a transverse plane of the worm wheel and by subscript "2" when referred instead to a transverse plane of the worm. The apexes "r" and "v" denote the worm wheel and the worm, respectively.

The number of races (or starts) onto the worm and the worm wheel defines the angular pitches $p^r_{ang}$ and $p^v_{ang}$ of the worm wheel and of the worm, respectively. Denoting by $z_{start}$ the number of starts of the worm, the relation

$$p^v{}_{ang} = p^r{}_{ang} \cdot z_{start}.$$

applies. Considering that a full revolution of the worm causes on the worm wheel a rotation equal to the angular pitch of the worm, the transmission ratio $\tau$ is defined by:

$$\tau = \frac{2\pi}{p^v{}_{ang}} = \frac{2\pi}{z_{start} \cdot p^r{}_{ang}}.$$

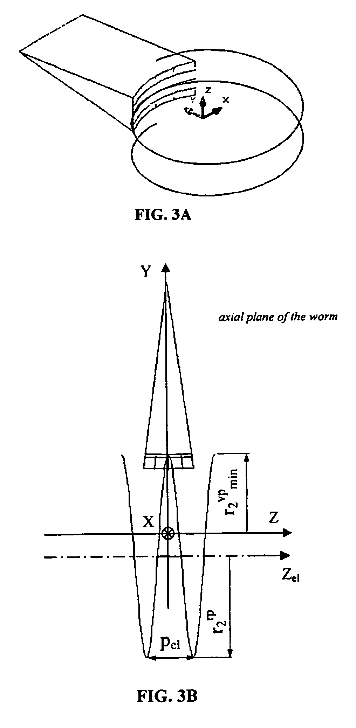

As it is schematically shown in Figures 3A and 3B, the trajectory of the cutting tool that has to obtain the races onto the worm wheel, in the conventional cutting modes, is defined by a cylindrical helix having constant radius that represents the locus of the subsequent positions of the centre of the cutting edge. The coordinates $(x_p, y_p, z_p)$ of said trajectory, related to the worm - worm wheel configuration of Figure 2 and in the reference system reported therein, are as follows:

$$\begin{cases} x_p = r_2{}^{rp} \cdot \sin(\gamma) \\ y_p = r_2{}^{rp} \cdot \cos(\gamma) - (r_2{}^{rp} - r_2{}^{vp}{}_{min}) \\ z_p = p_{el} \cdot \gamma \end{cases} \qquad \text{(I)}$$

wherein the various symbols denote: $\gamma$ the anomaly of the point crossing the cutting cylindrical helix in the transverse plane of the worm; $r_2{}^{rp}$ the curvature radius of the pitch line of the worm wheel in the XY plane; $r_2{}^{vp}{}_{min}$ the minimum curvature radius of the pitch line of the worm in its median transverse plane; $p_{el}$ the pitch of the helix.

Always with reference to Figures 2, 3A and 3B, the pitch $p_{el}$ of the cylindrical helix is measured along the generatrix of the cylinder onto which it wounds; therefore, the relation:

$$p_{el} = r_1{}^{rp}{}_{min} \cdot p^r{}_{ang}$$

applies, wherein $r_1{}^{rp}{}_{min}$ denotes the minimum curvature radius of the pitch line of the worm wheel in a transverse plane thereof.

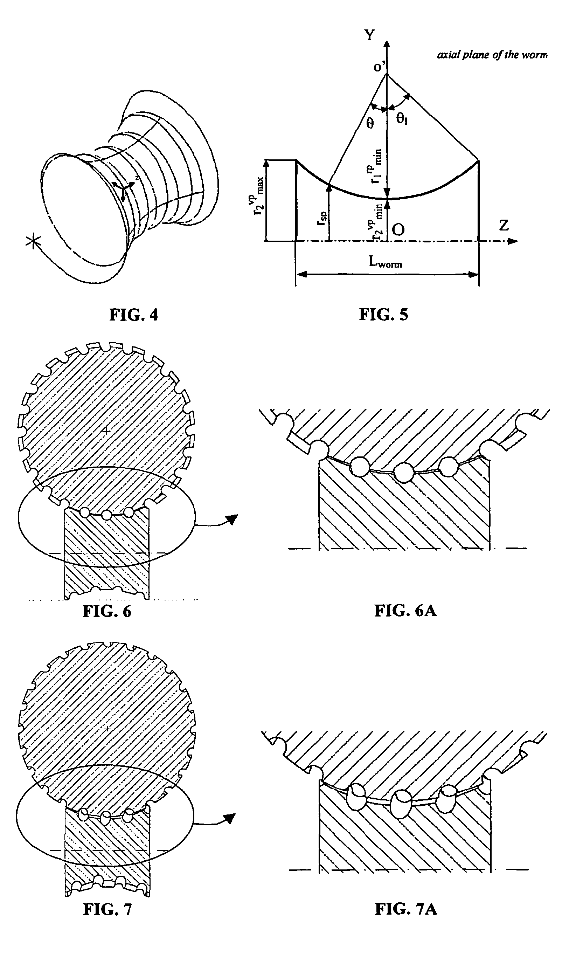

The cutting procedure of the worm wheel described above applies, though with further complexities, to the cutting of the races onto the worm. In fact, with reference to Figures 4 and 5, in this latter case the cutting of the races is carried out according to a cylindrical helix having a variable radius, denoted by $r_{sp}$ in Figure 5, winding about a solid (the worm being formed) having variable radius, which helix represents the locus of the subsequent positions of the center of the cutting edge. The helix angle varies with the angle $\theta$, which describes the subsequent angular positions assumed by the cutting element in the YZ plane. In particular, the helix angle decreases when going toward the transverse end planes of the worm.

The coordinates $(x, y, z)$ of such helical trajectory of the cutting edge, in the reference of Figure 5, are as follows:

$$\begin{cases} x = r_{sp} \cdot \sin(\tau \cdot \theta) = \left(r_2^{vp}{}_{min} + r_1^{rp}{}_{min} \cdot (1 - \cos\theta)\right) \cdot \sin\left(\frac{2\pi}{p^{v}{}_{ang}} \cdot \theta\right) \\ y = r_{sp} \cdot \cos(\tau \cdot \theta) = \left(r_2^{vp}{}_{min} + r_1^{rp}{}_{min} \cdot (1 - \cos\theta)\right) \cdot \cos\left(\frac{2\pi}{p^{v}{}_{ang}} \cdot \theta\right), \qquad \text{(II)} \\ z = r_1^{rp} \cdot \sin\theta \end{cases}$$

wherein

$$r_{sp} = r_2^{vp}{}_{min} + r_1^{rp}{}_{min} \cdot (1 - \cos\theta).$$

Therefore, also for the worm it is used, in the known art, a cutting profile identical to that used for the worm wheel, i.e. consisting in a circular profile whose centre describes the above-defined helix.

The result of the cutting of worm and worm wheel by the above-described conventional modes is depicted in Figures 6 and 6A (showing the matings of the races in the sole section obtained with the transverse median plane of the worm wheel - which is one of the abovementioned reference planes) and in Figures 7 and 7A (showing the matings of the races in the sole section obtained with a plane parallel to the preceding one).
As it may be appreciated from said figures, and in particular from Figures 7 and 7A, the center of the osculating ball related to each race onto the worm wheel gradually moves away from the center of the osculating ball related to the corresponding race onto the worm when gradually diverging from the reference plane of Figures 6-6A; thus, a "circumferential shift" occurs which in fact prevents the passage of the bearing balls and therefore their free circulation. In other words, the bearing balls are "compressed" and do not have the physical space in which to pass without interference, thereby sticking.

Hence, the cutting modes conceived to date for the matings of worm and worm wheel with circulation of bearing balls do not lead to the definition of a kinematically correct mechanism; the more the sectioning plane considered diverges from the reference planes, the more such a defectiveness is increased.

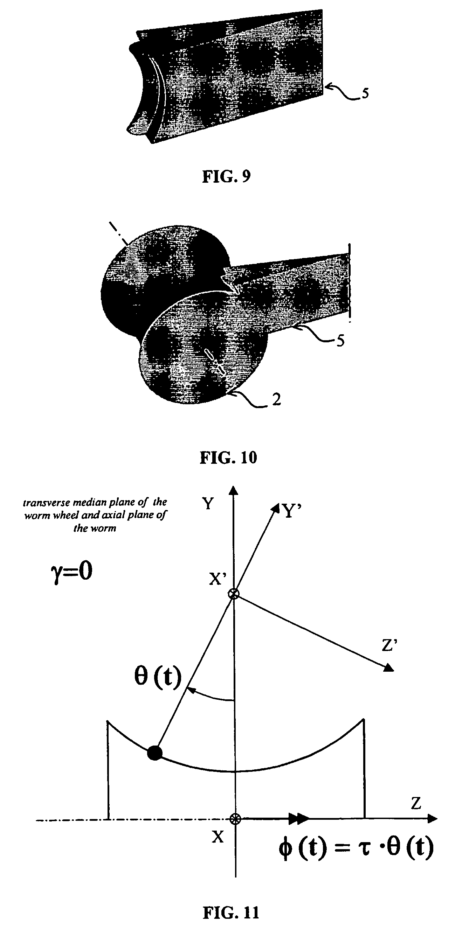

The present invention, starting from the detection of the inconsistencies of the worm - bearing balls - worm wheel kinematic systems conceived to date, proposes an innovative method for cutting that overcomes the inconsistencies themselves.
Hence, hereinafter there will be described the modes for cutting the races 20 obtained onto the worm 2 and the races 30 obtained onto the worm wheel 3 of Figure 8 according to the present invention.
As for the cutting of the races onto the worm 2, this is of an envelope type. In particular, the cutting is carried out according to a cutting profile obtained substantially as envelope of the subsequent positions assumed by the bearing balls perfectly confined within the races of the mating worm wheel.
In a method, not falling under the scope of the invention, the cutting is carried out by a single cutting element 5 the profile of which substantially corresponds to said envelope. The concept of such a cutting element 5 is shown in Figure 9, whereas Figure 10 schematically shows the action of said element 5 to obtain the races 20 onto the worm 2. With reference to these latter two figures, the cutting element 5 is made in the form of an angular portion of the worm wheel 3 onto which it is added the envelope of the position of a bearing ball 4 perfectly confined within the race 30 of the worm wheel itself, with a diameter equal to that of the circulating bearing ball apart from the clearance required for operation. The subsequent positions of the bearing ball center, generating said envelope, lie onto the cylindrical helix having constant radius defined by equation (I) (reference cylindrical helix).
The generation of races on the worm 2, for a single start, occurs by a solid subtraction obtainable by imposing to said cutting element 5 and to the body of the worm 2 the same reciprocal motion of the worm wheel 3 - worm 2 mating of system 1 being constructed, i.e. assigning to the cutting element 5 and to the worm 2 a relative rotation corresponding to the transmission ratio desired for the worm - worm wheel mating being constructed. Said process can be generalized for the cutting of other optional starts. Figure 11 schematically illustrates said cutting motion given to the worm 2 and to the cutting element 5 in the YZ axial plane of the worm 2, coincident with the transverse median plane of the worm wheel. In this latter figure, the general angular position of the cutting element 5 is denoted by θ(t) and the reference system integral to the cutting element itself by X'Y'Z'.
Always with reference to Figure 11, the rotations φ and θ of the worm body 2 and of the cutting element 5 are bound by the following relation:

$$\phi = \frac{2\pi}{p^v_{ang}} \cdot \theta = \tau \cdot \theta,$$

wherein $\tau$ denotes the desired transmission ratio, $p^v_{ang}$ the angular pitch of the worm 2 and $\phi$ the rotation of the worm 2 about its axis.

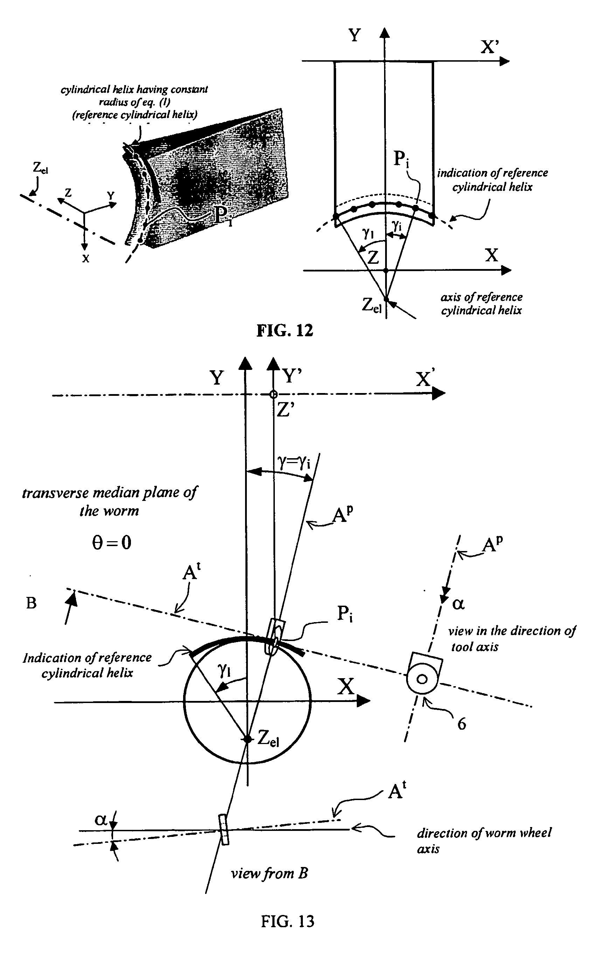

The cutting motion by envelope can be obtained by discretizing the cutting element of Figure 9, assumed as generating profile, into predetermined cutting subprofiles. This entails considering a predefined number of reference points of the generating profile (Figure 12) of the cutting element of Figure 9 (preferably corresponding to different subsequent positions of the center of the enveloping ball), lying onto the reference cylindrical helix of equation (I), to each of which points there being given the worm 2 - worm wheel 3 coupled motion defined by the transmission ratio. Said coupled motion of each reference point corresponds, for each of them, to an own trajectory thereof describing a helix having a variable radius about the worm, described by an equation in the form of (II).

Preferably, these reference points consist in the centers of the sections of the profile of the cutting element, sections that are the envelope of the position of the ball circulating inside the worm wheel race, with a diameter equal to that of the circulating ball apart from the clearance required for operation.

More specifically, in Figure 12 there are reported, by way of example, six reference points, lying onto the section of helix having constant radius defined for $-\gamma_1 < \gamma < \gamma_1$, where $\gamma_1$ denotes the maximal anomaly corresponding to the two transverse end planes of the worm wheel (Figure 2) and measured in a transverse plane of the worm. Such a definition range practically corresponds to the face width of the worm wheel, said width already denoted by L in Figure 2.

To each of the predefined reference points it is possible to associate a classical plane tool, oriented according to the helix onto the worm wheel, with a circular profile of the cutting edge.

Of course, it is also possible to use a single plane tool with a circular profile of the cutting edge to which different cutting trajectories are given for each of the reference points defined. In such a case, each cutting trajectory of the tool translates into a helix having a variable radius with a different initial position, depending on the preselected reference point, corresponding to the giving of a worm-tool coupled motion complying with the desired transmission ratio of the worm - worm wheel kinematic pair being constructed, with a different initial position of the cutting edge. Therefore, such a worm - worm wheel coupled motion is to be given to the single plane tool for each of its subsequent passes.

Hence, with each of the preselected reference points it is possible to associate a machining pass. The sequence of the different cutting trajectories, each of which corresponding to its own reference point, reconstructs, by envelope, the cutting of the tool of Figure 9 (generating profile) apart for the approaching motions of the tool itself, defining the final shape of the slot onto the worm.

The diameter of the circular cutting edge is equal to the diameter of the circulating bearing ball with the addition of the clearance required for operation.

Figure 13 schematically illustrates the modes for cutting the worm in the transverse median plane of the latter in case a single tool having a circular cutting edge is used for one of the subsequent cutting passes. In Figure 13, $A^r$ denotes the axis of the worm wheel and $A^t$ that of the circular cutting edge. As it is shown in said figure, in order to reproduce the generating profile (5), i.e. the cutting of the tool of Figure 9 (corresponding to the envelope of the bearing ball circulating inside the race of the worm wheel) it is necessary to ensure that the circular profile 6 of the cutting edge be constantly arranged, during the cutting operation, in the plane normal to the trajectory of the center of the circular cutting edge in the relative motion between the latter and the worm to be cut and with the toolholder axis $A^p$ incident to the axis of the reference cylindrical helix having constant radius represented by equations (I). Thus, with the plane tool having a circular cutting edge there are obtained cut profiles having circular section in the planes normal to the trajectory and elliptical profiles in all the other planes.

Practically, this translates into the definition of the rotation $\alpha$ of the toolholder about its own axis $A^p$ of Figure 13 (obviously, the rotation $\alpha$ may be imposed to the toolholder arm having axis Y') and of its arrangement with an angle $\gamma$ with respect to the Y axis of Figure 13. The rotation $\alpha$ is the variation, as a function from the rotation angle $\theta$, of the inclination angle of the helix with respect to a transverse plane of the worm. Since:

$$\tan \alpha = \frac{p_{sp}}{2\pi r_{sp}},$$

bearing in mind that the linear pitch of the spiral equals:

$$p_{sp} = r_1^{rp}{}_{min} \cdot p^{v}{}_{ang}$$

whereas the radius of the worm helix is:

$$r_{sp} = r_2^{vp}{}_{min} + r_1^{rp}{}_{min} \cdot \left(1 - \cos\theta\right),$$

it is obtained the following law of variation of the helix angle $\alpha$ depending on the rotation angle $\theta$:

$$\alpha = arc \tan \frac{r_1^{rp}{}_{min} \cdot p^{v}{}_{ang}}{2\pi \cdot \left(r_2^{vp}{}_{min} + r_1^{rp}{}_{min} \cdot \left(1 - \cos\theta\right)\right)}. \qquad (III)$$

Hence, with reference to Figure 13, during the cutting motion, obtained by imposing to the worm a rotation $\phi = \tau \cdot \theta$ about its Z axis and to the toolholder a rotation $\theta$ in the YZ plane of Figure 11, the toolholder axis $A^p$ should rotate about itself, depending on the angle $\theta$, of the angle $\alpha$ defined by relation (III). Moreover, during said machining, the toolholder axis $A^p$ should constantly be arranged, in the XY plane, with respect to the transverse median plane of the worm wheel, with the angle $\gamma$, indicated in Figure 13, corresponding to the initial position of the reference point of the machining pass at issue (angle $\gamma$ is different for each subsequent machining pass). The toolholder arm should be arranged so that the toolholder axis $A^p$ is arranged with an angle $\gamma$ exactly equal to the one that has enabled the definition of the reference point onto the helix section of eq. (I).

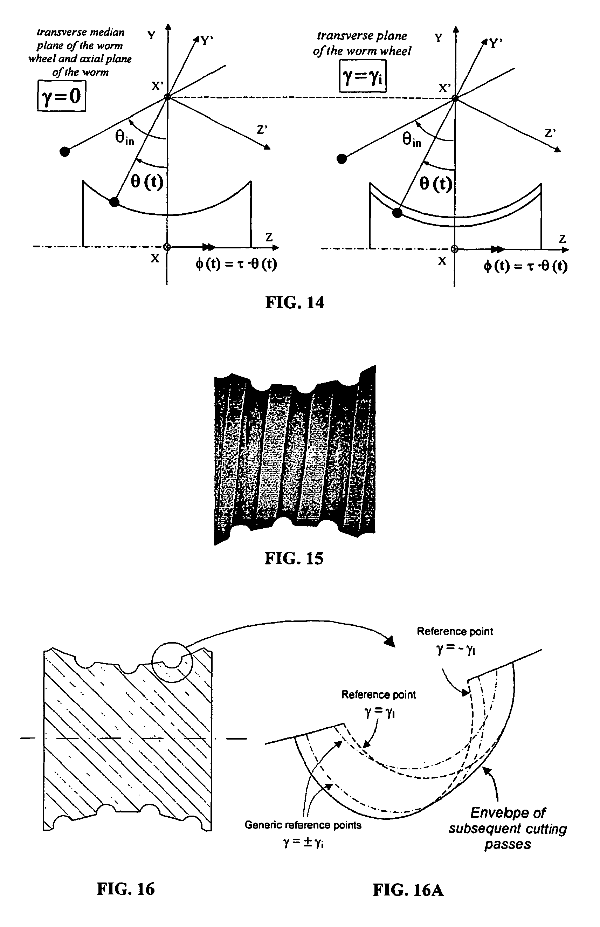

Figure 13 refers to the tool motion corresponding to a determined reference point lying onto the length of reference cylindrical helix having constant radius of eq. (I), depending on the preselected angle $\gamma$. For all the other reference points (initial "pass" points) there should be carried out the same type of envelope, consisting of the two rotations $\phi$ and $\theta$, taking care to keep unvaried the position of the rotation axis X' of the tool (notwithstanding the lengthening of the initial arm thereof) and therefore the cutting inter-axis (coinciding with the working one of worm and worm wheel), as indicated in Figure 14.

Analytically, the relative motion of the center $P_i$ of the cutting edge with respect to the worm is described parametrically, for each of the reference points lying onto the length of reference cylindrical helix of eq. (I) ranging between $-\gamma_1 < \gamma < \gamma_1$, by the following relations, referring to a right-hand helix trajectory having variable radius like that described by eq. (II):

$$\begin{Bmatrix} x_{P_{i,\theta}} \\ y_{P_{i,\theta}} \\ z_{P_{i,\theta}} \end{Bmatrix} = \begin{bmatrix} \cos(\tau \cdot \vartheta) & \sin(\tau \cdot \vartheta) & 0 \\ -\sin(\tau \cdot \vartheta) & \cos(\tau \cdot \vartheta) & 0 \\ 0 & 0 & 1 \end{bmatrix} \cdot \begin{bmatrix} 1 & 0 & 0 \\ 0 & \cos\vartheta & -\sin\vartheta \\ 0 & \sin\vartheta & \cos\vartheta \end{bmatrix} \cdot \begin{Bmatrix} x_{P_i} \\ y_{P_i} \\ z_{P_i} \end{Bmatrix} + \begin{bmatrix} \cos(\tau \cdot \vartheta) & \sin(\tau \cdot \vartheta) & 0 \\ -\sin(\tau \cdot \vartheta) & \cos(\tau \cdot \vartheta) & 0 \\ 0 & 0 & 1 \end{bmatrix} \cdot \begin{Bmatrix} 0 \\ I \\ 0 \end{Bmatrix}$$

wherein the subscript $P_{i,\theta}$ denotes the generic position of the point $P_i$ in presence of a rotation $\theta$.

By following this expression for each of the n initial machining reference points $P_i$, lying onto the length of reference cylindrical helix of eq. (I) ranging between $-\gamma_1 < \gamma < \gamma_1$, the desired *n* cutting passes are obtained. To each machining pass there corresponds, in the relative motion of the centre of the cutting edge with respect to the worm, a cylindrical helix having variable radius described by an equation of type (II) and of the type of that described in Figure 4 (corresponding to a single cutting pass carried out with an initial point $P_i$ related to an angle $\gamma$=0).

In light of the foregoing, the operation of cutting with a single tool having a cutting edge with circular head can be articulated in the following steps:

(a) identifying *n* reference points $P_i$ onto the reference cylindrical helix having constant radius of eq. (I) containing the centres of the profile of the cutting edge of Figure 9 (generating profile); each point is defined by an angle $-\gamma_i < \gamma < -\gamma_i$ in equation (I) and corresponds to one of the *n* machining passes envisaged.

(b) positioning and orienting the tool in a plane transverse for the worm - coincident or parallel to the XY plane of Figure 13 - in the *i*-th reference point $P_i$ (for the first pass, e.g., in the point $P_i$ corresponding to $\gamma_i = -\gamma_i$) with an inclination angle $\gamma_i$ of the toolholder axis $A^p$ with respect to the Y axis;

(c) positioning the tool in the corresponding transverse plane of the worm wheel - e.g. the YZ plane of Figure 14 - in the initial position of the cutting motion of the *i*-th pass, corresponding to the angle $\theta_{init} = -\theta_l - p^v_{ang}$ ;

(d) adjusting the distance between centers of the *i*-th pass (according to the diagram of Figure 14) corresponding to the *i*-th angle $\gamma_i$ (point $P_i$);

(e) performing the cutting motion of the *i*-th pass (rotation $\phi(t) = \tau \cdot \theta(t)$ of the worm along its Z axis and rotation $\theta(t)$ of the toolholder in the YZ plane), complying with the toolholder orientation given by rotation $\alpha$ ;

(f) passing to the subsequent position $P_i$ lying onto the length of reference cylindrical helix having constant radius of eq. (I) (angle $\gamma_i$) and returning to step (b) up to the last reference point (e.g. $\gamma_i = +\gamma_l$).

The array of steps (b), (c), (d) defines the correct initial positioning and orienting (in space) of the center of the tool for the *i*-th pass with respect to the worm (correct positioning and relative orienting between the center of the tool and the worm).

The result of said operations of cutting by envelope of the subsequent n passes is depicted in Figure 15.

In Figure 16 it is depicted a section of the worm obtained with a plane parallel to the transverse median plane of the worm wheel after a single pass of the tool, corresponding to the angle $\gamma=0$. Instead, Figure 16A shows the result of the cutting by envelope obtained with all the subsequent passes at a race. Since the latter Figure refers to a section comprised between the transverse median one and the transverse end section of the worm wheel, evidently about the central bearing ball the race onto the worm 2 has a clearance more marked in the right-side portion.

The process for cutting by subsequent passes with a tool having a circular cutting edge of the present embodiment is not the only viable one in order to obtain the desired races. In fact, for passes subsequent to the median one ($\gamma=0$) the cutting may be carried out by, e.g., a cutter having a spherical head provided with rotary cutting motion with respect to the toolholder axis $A^p$; in this case, it is no more necessary to ensure the control of the angle $\alpha$ along the tool axis $A^p$, indicated in the preceding step (e) and highlighted in Figure 13.

According to a different method, the cutting is carried out by a single pass, apart for the approaching motions of the tool, using a cutter having a spherical, ellipsoid-shaped or, even more generally, revolution ovoid - shaped head.

Moreover, with a further method it is possible to obtain the desired races by a tool gear developed *ad hoc* and consisting in a worm wheel onto which it is mounted a plurality of cutting edges having circular head arranged in planes orthogonal to the axis of the reference cylindrical helix having constant radius of eq. (I), characteristic of the generating profile (5) of Figure 9. In order to obtain the desired cutting of the races 20 onto the worm 2, apart from the approaching motions, it is imposed to the worm being cut a rotative motion about its axis and to the tool gear the coupled motion of rotation deriving from the set transmission ratio. Thus, the cutting operation becomes particularly advantageous, because it is obtained with a continuous generating motion, with no need of repositioning the tool.

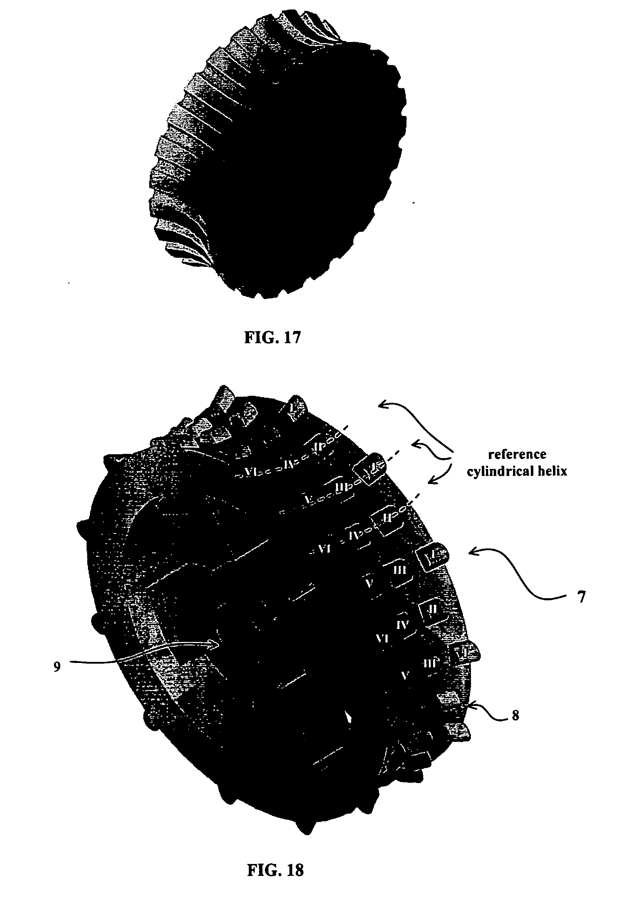

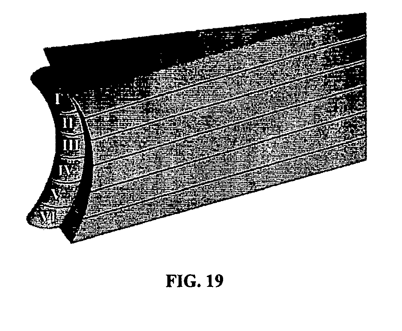

An embodiment of a tool gear according to the invention (with six cutting edges) is shown in Figure 18. Such a tool gear, denoted by 7, has a globoidal worm wheel - shaped main body 8 that can be mounted to a suitable support by a suitable seat 9. The main body, at its peripheral globoidal surface, has a number of cutting edges referable to six different positionings of the profiles, denoted by numerals I to VI, respectively; each of the profiles corresponds to a portion of the cutting edge of Figure 9 associated with a determined reference point of the length of cylindrical helix of the generating profile of Figure 9, as shown in Figure 19.

As for the cutting of the races onto the worm wheel, this can be the traditional one described above, since the helix angle of the trajectory of the relative motion between worm wheel and tool during the cutting is constant. Hence, it suffices to give a helical motion to the cutting profile, taking care to set for the normal to the tool profile an angle with respect to the X axis equal to that of the helix described in the motion. This procedure should be adopted for the cutting of a single race. Therefore, to obtain the cutting of the entire worm wheel it should be repeated to completion of the round angle.

The result of said operations of cutting the worm wheel is shown in Figure 17.

The proposed methodology allows also to translate the depth of the cutting of the slot in the worm and in the worm wheel, increasing the one and decreasing the other one of the same quantity, thereby modifying the pitch circle radiuses of the worm and of the worm wheel. In practice, this variation consists in the modification of the radiuses of the helices. In this way, basically a repositioning of the races of the bearing balls along the direction of the inter-axis is attained.

It will be understood that the modes for cutting of the invention allows to manufacture worm and worm wheel matings with circulation of bearing balls complying with any specific design or technological application.

The scope of the present invention is defined by the appended claims.

## Claims

1. A cutting tool-gear (7) with a globoidal worm wheel shaped main body (8), apt to cut the races (20) of the worm (2) in a worm-gear reduction unit with circulation of bearing balls (1), wherein the centers of the bearing balls (1) circulating into the worm races being formed, describe a reference cylindrical helix, comprising a gear-shaped main body and a plurality of cutting elements (I-VI) each having a plane profile arranged peripherally to the main body and in planes orthogonal to the axis of said cylindrical helix, the enveloppe of the balls defining a generating device which, in turn, is defined as a generating device (5) suitable for the definition of races (20) of the worm (2) in a worm-gear reduction unit with circulation of bearing balls (1), comprising a generating device main body shaped as an angular main body shaped as an angular portion of the worm wheel (3) apt to mate with said worm (2) and having an extension equal to an angular pitch of the worm wheel (3) itself, onto which portion is added the envelope of the position of a ball inside the race (30) of the worm wheel (3), the centres of which ball define a reference cylindrical helix and wherein the radius of the ball is not necessarily identical to that of the ball (4) circulating in the reduction unit.

2. The tool-gear (7) according to the preceding claim, wherein each of said cutting elements (I-VI) has a substantially circular cutting profile.

3. The tool-gear (7) according to claim 1 or 2, wherein the cutting elements (I-VI) are differently aligned along one or more threads.

4. A method for cutting worm and worm wheel in a worm-gear reduction unit with circulation of bearing balls (1), wherein the centers of said bearing balls (1) describe a reference cylindrical helix, comprising the steps of:

(a) obtaining races (30) for the bearing balls (4) onto the worm wheel (3); and
(b) obtaining races (20) for the bearing balls (4) onto the worm (2), wherein said step (b) provides the cutting of the races (20) according to a reference cutting profile substantially corresponding to the envelope of the subsequent positions assumed by the balls within the worm wheel races being formed,
**characterised in that**
said step (b) is carried out in a discrete sequence of cutting passes, each of said cutting passes being performed by at least one cutting element subject to a cutting motion, wherein each of said at least one cutting elements is initially positioned, before its cutting motion, according to a reference cutting profile, so that its center is disposed on the reference cylindrical helix and, during the cutting motion the cutting element is oriented with an axis ($A^t$) thereof incident to the longitudinal axis of the reference cylindrical helix and each of said at least one cutting elements is rotated, during the cutting motion, about an axis thereof orthogonal to the reference profile according to the relation:

$$\alpha = arc\tan\frac{r_1^{rp}{}_{min} \cdot p^v{}_{ang}}{2\pi \cdot \left(r_2^{vp}{}_{min} + r_1^{rp}{}_{min} \cdot (1 - \cos\theta)\right)},$$

wherein $\alpha$ denotes the helix angle and $p^v{}_{ang}$ the angular pitch of the worm (2).

5. The cutting method according to claim 4, wherein said step (b) provides that to the worm (2) and to each of said cutting elements there be given, as cutting motions, the motions of the worm (2) and of the worm wheel (3) of the worm-gear reduction unit (1) being constructed, respectively, said cutting motions of the worm (2) and of the cutting element being bound by the relation:

$$\varphi = \tau \cdot \bar{\theta} \ ,$$

wherein $\tau$ denotes the transmission ratio desired for the worm-gear reduction unit (1), $\phi$ the rotation of the worm (2) and $\theta$ the rotation of the cutting element in a transverse plane (YZ) of the worm wheel (3).

6. The method for cutting according to the preceding claim, wherein said step (b) is carried out by using a single cutting element.

7. The method for cutting according to claim 6, wherein said single cutting element has a substantially plane cutting profile.

8. The method for cutting according to claim 6 or 7, wherein said single cutting element has a cutting profile with a substantially circular, elliptical or ovoid shape.

9. The method for cutting according to claim 5, wherein said step (b) is carried out by using multiple cutting elements preliminary arranged on a tool-gear, each of them so to result constantly oriented during its cutting motion, the action of the tool-gear so defining said sequence of cutting passes.

10. The method for cutting according to claim 9, wherein each of said multiple cutting element has a substantially plane cutting profile.

11. The method for cutting according to claim 9 or 10, wherein each of said multiple cutting element has a cutting profile with a substantially circular, elliptical or ovoid shape.

12. The method for cutting according to any one of the claims 9 to 11, providing the use of a cutting tool-gear according to any one of the claims 1 to 3.

13. The method for cutting according to any one of the claims 4 to 6, wherein said step (b) is carried out by a cutter having a spherical head.

14. The method for cutting according to any one of the claims 4 to 6, wherein said step (b) is carried out in cutting passes of said discrete sequence of cutting passes by a cutter having an ellipsoid- or a revolution ovoid - shaped head.

15. The method for cutting according to any one of the claims 4 to 14, wherein said step (a) is carried out by giving to a cutting element an helical cutting motion for each race (30) of the worm wheel (3).

16. The method for cutting according to the preceding claim, wherein in said step (a) said cutting element is positioned with an inclination angle with respect to the axis of the worm wheel (3) equal to the angle of the helix described in said cutting motion.


**Patentansprüche**

1. Schneidwerkzeugrad (7) mit einem globoidschneckenradförmigen Hauptkörper (8), das dafür ausgebildet ist, die Laufrillen (20) der Schnecke (2) in einer Schneckengetriebeuntersetzungseinheit mit umlaufenden Lagerkugeln (4) zu schneiden, wobei die Zentren der Lagerkugeln (4), die in den Laufrillen umlaufen, welche hergestellt werden, eine zylindrische Bezugshelix beschreiben, mit einem zahnradförmigen Hauptkörper und mehreren Schneidelementen (I-VI), von denen jedes ein ebenes Profil hat, das peripher zu dem Hauptkörper und in Ebenen angeordnet ist, die zu der Achse der zylindrischen Helix orthogonal sind, wobei die Hüllkurve der Kugeln eine Erzeugungsvorrichtung definiert, welche ihrerseits als ein Erzeugungsvorrichtung (5) definiert ist, die für die Definition der Laufrillen (20) der Schnecke (2) in einer Schneckengetriebeuntersetzungseinheit mit umlaufenden Lagerkugeln (4) geeignet ist, mit einem Erzeugungsvorrichtungshauptkörper, der als ein Winkelteil des Schneckenrades (3) geformt und dafür ausgebildet ist, mit der Schnecke (2) zusammenzupassen, und eine Ausdehnung hat, die gleich einem Teilungswinkel des Schneckenrades (3) selbst ist, wobei zu diesem Teil die Hüllkurve der Position einer Kugel innerhalb der Laufrille (30) des Schneckenrades (3) addiert wird, wobei die Zentren der Kugel eine zylindrische Bezugshelix definieren und wobei der Radius der Kugel nicht notwendigerweise mit dem der Kugel (4), die in der Untersetzungseinheit umläuft, identisch ist.

2. Werkzeugrad (7) nach dem vorhergehenden Anspruch, wobei jedes der Schneidelemente (I-VI) ein im Wesentlichen kreisförmiges Schneidprofil hat.

3. Werkzeugrad (7) nach Anspruch 1 oder 2, wobei die Schneidelemente (I-VI) längs einem oder mehreren Gewindegängen unterschiedlich ausgerichtet sind.

4. Verfahren zum Schneiden einer Schnecke und eines Schneckenrades in einer Schneckengetriebeuntersetzungseinheit mit umlaufenden Lagerkugeln (4), wobei die Zentren der Lagerkugeln (4) eine zylindrische Bezugshelix beschreiben, beinhaltend die Schritte:

(a) Herstellen von Laufrillen (30) für die Lagerkugeln (4) auf dem Schneckenrad (3); und
(b) Herstellen von Laufrillen (20) für die Lagerkugeln (4) auf der Schnecke (2), wobei der Schritt (b) das Schneiden der Laufrillen (20) gemäß einem Bezugsschneidprofil beinhaltet, welches im Wesentlichen der Hüllkurve der anschließenden Positionen entspricht, die durch die Kugeln innerhalb der Schneckenradlaufrillen, welche gebildet werden, eingenommen werden,

**dadurch gekennzeichnet, dass** der Schritt (b) in einer diskreten Folge von Schneiddurchgängen ausgeführt wird, wobei jeder der Schneiddurchgänge durch wenigstens ein Schneidelement ausgeführt wird, welches eine Schneidbewegung ausführt, wobei jedes von den wenigstens einen Schneidelementen am Anfang, bevor seiner Schneidbewegung, gemäß einem Bezugsschneidprofil positioniert wird, so dass sein Zentrum auf der zylindrischen Bezugshelix angeordnet ist, und dass während der Schneidbewegung das Schneidelement mit einer Achse (A^t) desselben so ausgerichtet wird, dass diese die Längsachse der zylindrischen Bezugshelix schneidet, und dass jedes der wenigstens einen Schneidelemente während der Schneidbewegung um eine Achse desselben gedreht wird, die zu dem Bezugsprofil orthogonal ist, gemäß der Beziehung:

$$\alpha = \arctan \frac{r_1^{rp}\min \cdot p_{ang}^{v}}{2\pi \cdot \left(r_2^{vp}\min . + r_1^{rp}\min \cdot (1-\cos\theta)\right)}$$

wobei $\alpha$ den Helixwinkel und $p_{ang}^{v}$ den Teilungswinkel der Schnecke (2) bezeichnet.

5.  Schneidverfahren nach Anspruch 4, wobei der Schritt (b) beinhaltet, dass der Schnecke (2) und jedem der Schneidelemente als Schneidbewegungen die Bewegungen der Schnecke (2) und des Schneckenrades (3) der Schneckengetriebeuntersetzungseinheit (1), die hergestellt wird, gegeben werden, wobei die Schneidbewegungen der Schnecke (2) und des Schneidelements der Beziehung gehorchen:

$$\varphi = \tau \cdot \theta ,$$

wobei $\tau$ das für die Schneckengetriebeuntersetzungseinheit (1) gewünschte Übersetzungsverhältnis bezeichnet, $\varphi$ die Drehung der Schnecke (2) und $\theta$ die Drehung des Schneidelements in einer Querebene (YZ) des Schneckenrades (3).

6.  Schneidverfahren nach dem vorhergehenden Anspruch, wobei der Schritt (b) unter Verwendung eines einzelnen Schneidelements ausgeführt wird.

7.  Schneidverfahren nach Anspruch 6, wobei das einzelne Schneidelement ein im Wesentlichen ebenes Schneidprofil hat.

8.  Schneidverfahren nach Anspruch 6 oder 7, wobei das einzelne Schneidelement ein Schneidprofil mit im Wesentlichen Kreis-, Ellipsen- oder Ovoidform hat.

9.  Schneidverfahren nach Anspruch 5, wobei der Schritt (b) unter Verwendung von mehreren Schneidelementen ausgeführt wird, die zuvor auf einem Werkzeugrad angeordnet werden, und zwar jedes von ihnen derart, dass es im Ergebnis während seiner Schneidbewegung konstant ausgerichtet ist, wobei die Wirkung des Werkzeugzahnrades so die Folge von Schneiddurchgängen festlegt.

10. Schneidverfahren nach Anspruch 9, wobei jedes der mehreren Schneidelemente ein im Wesentlichen ebenes Schneidprofil hat.

11. Schneidverfahren nach Anspruch 9 oder 10, wobei jedes der mehreren Schneidelemente ein Schneidprofil mit im Wesentlichen Kreis-, Ellipsen- oder Ovoidform hat.

12. Schneidverfahren nach einem der Ansprüche 9 bis 11, beinhaltend die Verwendung eines Schneidwerkzeugrades nach einem der Ansprüche 1 bis 3.

**13.** Schneidverfahren nach einem der Ansprüche 4 bis 6, wobei der Schritt (b) durch einen Fräser ausgeführt wird, der einen sphärischen Kopf hat.

**14.** Schneidverfahren nach einem der Ansprüche 4 bis 6, wobei der Schritt (b) in Schneiddurchgängen der diskreten Folge von Schneiddurchgängen durch einen Fräser ausgeführt wird, der einen ellipsoid- oder einen rotationsovoidförmigen Kopf hat.

**15.** Schneidverfahren nach einem der Ansprüche 4 bis 14, wobei der Schritt (a) ausgeführt wird, indem einem Schneidelement eine Schraubschneidbewegung für jede Laufrille (30) des Schneckenrades (3) gegeben wird.

**16.** Schneidverfahren nach dem vorhergehenden Anspruch, wobei in dem Schritt (a) das Schneidelement mit einem Neigungswinkel gegen die Achse des Schneckenrades (3) positioniert wird, der gleich dem Winkel der Helix ist, die in der Schneidbewegung beschrieben wird.

**Revendications**

**1.** Roue dentée formant outil de coupe (7) à corps principal (8) en forme de roue dentée à vis sans fin globique, apte à tailler les chemins de roulement (20) de la vis sans fin (2), dans un réducteur à roue et vis sans fin à circulation de billes (1) de roulement, dans lequel les centres des billes (1) de roulement circulant jusque dans les chemins de roulement de la vis sans fin à former décrivent une hélice cylindrique de référence, comprenant un corps principal en forme de roue dentée et une pluralité d'éléments de coupe (I-VI) ayant chacun un profil plan disposés sur le pourtour du corps principal et dans des plans orthogonaux à l'axe de ladite hélice cylindrique, l'enveloppe des billes définissant un dispositif générateur qui se définit lui-même comme dispositif générateur (5) permettant la définition des chemins de roulement (20) de la vis sans fin (2) dans un réducteur à roue et vis sans fin à recirculation de billes (1) de roulement, comportant un corps principal de dispositif générateur agencé sous la forme d'une partie angulaire de la roue (3) à vis sans fin apte à s'accoupler avec ladite vis sans fin (2) et ayant une extension égale à un pas angulaire de la roue (3) à vis sans fin elle-même, partie sur laquelle est ajoutée l'enveloppe de la position d'une bille à l'intérieur du chemin de roulement (30) de la roue (3) à vis sans fin, les centres de ladite bille définissant une hélice cylindrique de référence, et dans lequel le rayon de la bille n'est pas forcément identique à celui de la bille (4) circulant dans le réducteur.

**2.** Roue dentée formant outil (7) selon la revendication précédente, dans lequel chacun desdits éléments de coupe (I-VI) a un profil de coupe sensiblement circulaire.

**3.** Roue dentée formant outil (7) selon la revendication 1 ou 2, dans lequel les éléments de coupe (I-VI) sont alignés différemment sur un ou plusieurs filets.

**4.** Procédé pour usiner une vis sans fin et une roue à vis sans fin dans un réducteur à roue dentée et vis sans fin à circulation de billes (1) de roulement, dans lequel les centres desdites billes (1) de roulement décrivent une hélice cylindrique de référence, comprenant les étapes consistant à :

(a) former sur la roue (3) à vis sans fin des chemins (30) pour les billes (4) de roulement ; et
(b) former sur la vis sans fin (2) des chemins (20) pour les billes (4) de roulement, ladite étape (b) réalisant la taille des chemins de roulement (20) suivant un profil de coupe de référence correspondant sensiblement à l'enveloppe des positions ultérieures prises par les billes dans les chemins de roulement de roue à vis sans fin formés,

**caractérisé en ce que** ladite étape (b) est exécutée en une suite de passes d'usinage distinctes, chacune desdites passes d'usinage étant effectuée par au moins un élément de coupe animé d'un mouvement de coupe, chacun desdits au moins un éléments de coupe étant initialement placé, avant son mouvement de coupe, suivant un profil de coupe de référence, de façon que son centre soit disposé sur l'hélice cylindrique de référence et, pendant le mouvement de coupe, l'élément de coupe étant orienté avec un axe (A') de celui-ci incident sur l'axe longitudinal de l'hélice cylindrique de référence et chacun desdits au moins un éléments de coupe étant amené à tourner, pendant le mouvement de coupe, autour d'un axe de celui-ci orthogonal au profil de référence conformément à la relation :

$$\alpha = arc\ \mathrm{tg}\ \frac{r_1^{rp}\min\cdot p^v ang}{2\pi\cdot\left(r_2^{vp}\min+r_1^{rp}\min\cdot(1-\cos\theta)\right)}\ ,$$

où $\alpha$ désigne l'angle d'hélice et $p^v_{ang}$ le pas angulaire de la vis sans fin (2).

**5.** Procédé d'usinage selon la revendication 4, dans lequel ladite étape (b) permet qu'à la vis sans fin (2) et à chacun des éléments de coupe soient respectivement donnés, comme mouvements de coupe, les mouvements de la vis sans fin (2) et de la roue (3) à vis sans fin du réducteur (1) à roue dentée et vis sans fin en construction, lesdits mouvements de coupe de la vis sans fin (2) et de l'élément de coupe étant liés par la relation :

$$\varphi = \tau\cdot\theta\ ,$$

où $\tau$ désigne le rapport de transmission voulu pour le réducteur (1) à roue dentée et vis sans fin, $\varphi$ la rotation de la vis sans fin (2) et $\theta$ la rotation de l'élément de coupe dans un plan transversal (YZ) de la roue (3) à vis sans fin.

**6.** Procédé d'usinage selon la revendication précédente, dans lequel ladite étape (b) est exécutée à l'aide d'un unique élément de coupe.

**7.** Procédé d'usinage selon la revendication 6, dans lequel ledit élément de coupe unique a un profil de coupe sensiblement plan.

**8.** Procédé d'usinage selon la revendication 6 ou 7, dans lequel ledit élément de coupe unique a un profil de coupe de forme sensiblement circulaire, elliptique ou ovoïde.

**9.** Procédé d'usinage selon la revendication 5, dans lequel ladite étape (b) est exécutée par de multiples éléments de coupe préalablement disposés sur une roue dentée formant outil, de manière à obtenir pour chacun d'eux une orientation constante pendant son mouvement de coupe, l'action de la roue dentée formant outil définissant ainsi ladite suite de passes d'usinage.

**10.** Procédé d'usinage selon la revendication 9, dans lequel chacun desdits multiples éléments de coupe a un profil de coupe sensiblement plan.

**11.** Procédé d'usinage selon la revendication 9 ou 10, dans lequel chacun desdits multiples éléments de coupe a un profil de coupe de forme sensiblement circulaire, elliptique ou ovoïde.

**12.** Procédé d'usinage selon l'une quelconque des revendications 9 à 11, permettant l'utilisation d'une roue dentée formant outil de coupe selon l'une quelconque des revendications 1 à 3.

**13.** Procédé d'usinage selon l'une quelconque des revendications 4 à 6, dans lequel ladite étape (b) est exécutée par un outil de coupe à tête sphérique.

**14.** Procédé d'usinage selon l'une quelconque des revendications 4 à 6, dans lequel ladite étape (b) est exécutée lors de passes d'usinage de ladite suite de passes d'usinage distinctes par un outil de coupe à tête en forme d'ellipsoïde ou d'ovoïde de révolution.

**15.** Procédé d'usinage selon l'une quelconque des revendications 4 à 14, dans lequel ladite étape (a) est exécutée en donnant à un élément de coupe un mouvement hélicoïdal de coupe pour chaque chemin de roulement (30) de la roue (3) à vis sans fin.

**16.** Procédé d'usinage selon la revendication précédente, dans lequel, lors de ladite étape (a), ledit élément de coupe est placé avec un angle d'inclinaison par rapport à l'axe de la roue (3) à vis sans fin égal à l'angle de l'hélice décrite lors dudit mouvement de coupe.

**FIG. 1**

**FIG. 2**

**FIG. 3A**

**FIG. 3B**

FIG. 4

axial plane of the worm

FIG. 5

FIG. 6

FIG. 6A

FIG. 7

FIG. 7A

**FIG. 8**

**FIG. 9**

**FIG. 10**

*transverse median plane of the worm wheel and axial plane of the worm*

$\gamma = 0$

$\theta(t)$

$\phi(t) = \tau \cdot \theta(t)$

**FIG. 11**

cylindrical helix having constant
radius of eq. (1)
(reference cylindrical helix)

$Z_{el}$

Z    Y

X

$P_i$

Y

X'

$P_i$

indication of reference
cylindrical helix

$\gamma_l$  $\gamma_i$

Z

X

$Z_{el}$

axis of reference
cylindrical helix

**FIG. 12**

Y    Y'    X'

Z'

$\gamma = \gamma_i$

$A^p$

transverse median plane of
the worm

$\theta = 0$

$A^t$

$A^p$

$\alpha$

B

$P_i$

view in the direction of
tool axis

Indication of reference
cylindrical helix

$\gamma_l$

X

$Z_{el}$

6

$A^t$

$\alpha$

direction of worm wheel
axis

view from B

FIG. 13

19

**FIG. 14**

**FIG. 15**

**FIG. 16**                    **FIG. 16A**

**FIG. 17**

reference
cylindrical helix

**FIG. 18**

**FIG. 19**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3494215 A

- WO 03042574 A